Europäisches Patentamt

European Patent Office

Office européen des brevets

(11) Publication number: **0 012 232**
**A1**

## (12) EUROPEAN PATENT APPLICATION

(21) Application number: **79104516.4**

(22) Date of filing: **15.11.79**

(51) Int. Cl.³: **G 06 F 1/00**

(30) Priority: **29.11.78 JP 148472/78**

(43) Date of publication of application: **25.06.80**
**Bulletin 80/13**

(84) Designated Contracting States: **DE FR GB**

(71) Applicant: **NIPPONDENSO CO.,LTD., 1, 1-chome
Showa-cho, Kariya-shi Aichi-ken (JP)**

(72) Inventor: **Okamoto, Atutoshi, 7-21, Aza Iguiba, Oaza
Morioka, Higashiura-cho, Chita-gun Aichi-ken (JP)**
Inventor: **Shibata, Akira, 43, Honmachi Nakazima-cho,
Okazaki-shi Aichi-ken (JP)**

(74) Representative: **Zumstein, sen., Fritz, Dr. Dr. F. Zumstein
sen., Dr. E. Assmann Dr. R. Koenigsberger et al,
Dipl.-Phys. R. Holzbauer Dipl.-Ing. F. Klingseisen Dr. F.
Zumstein jun. Bräuhausstrasse 4,
D-8000 München 2 (DE)**

(54) Apparatus for switching over the operating frequency of a digital computer.

(57) In a control system having an electric power source, a controlled load kept operative when the electric power is supplied from the power source and a digital computer programmed to control the operation of the controlled load by executing stored instructions in timed relation with periodic clock pulses, the digital computer is constructed as a C-MOS type and a switch-over circuit is provided to keep the frequency of the periodic clock pulses at a high and low values when the electric power supplied to keep the controlled load operative is sufficient and insufficient, respectively.

EP 0 012 232 A1

Dr. F. Zumstein sen. - Dr. E. Assmann
Dr. R. Koenigsberger - Dipl. - Phys. R. Holzbauer
Dipl. - Ing. F. Kil ceaisen - Dr. P. Zumstein jun.
P a t e n t a n w ä l t e

APPARATUS FOR SWITCHING OVER THE OPERATING
FREQUENCY OF A DIGITAL COMPUTER

BACKGROUND OF THE INVENTION

The present invention relates to an apparatus for switching over, when the supply of electric power to a controlled load controlled by a C-MOS digital computer is switched off, the operating frequency of the digital computer from a high value to a low value to reduce the electric power consumed by the digital computer.

In a control system in which the operation of a controlled load kept operative with the supply of electric power is controlled by a digital computer programmed to perform predetermined calculations by executing stored instructions in timed relation with periodic clock pulses, it is often necessitated that the digital computer keeps storing the calculation result even after the supply of electric power to the controlled load is switched off. For this reason, the digital computer must be kept supplied with the electric power irrespective of the switched-on and switched-off conditions of the supply of electric power to the controlled load. The digital computer thus consumes the electric power. It is therefore desirable, particularly in the case where the power supply capacity of the electric power source is limited, to reduce the electric power consumed by the digital computer.

- 1 -

## SUMMARY OF THE INVENTION

It is an object of the invention to utilize a C-MOS type digital computer for controlling the operation of a controlled load and to switch over the operating frequency of the digital computer from a high value to a low value when the supply of electric power to the controlled load is switched off.

## BRIEF DESCRIPTION OF THE DRAWINGS

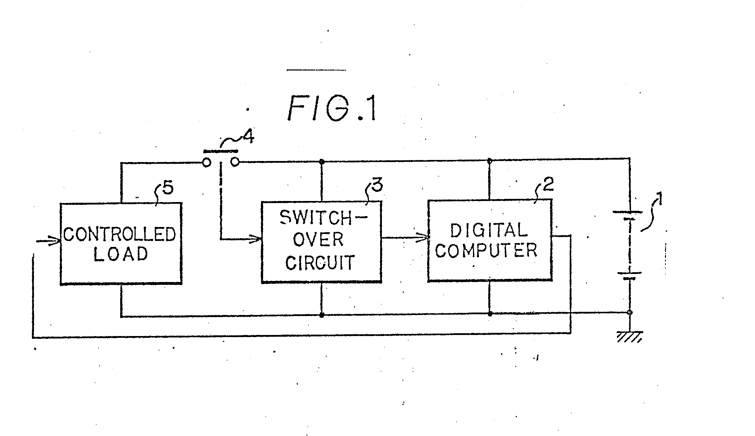

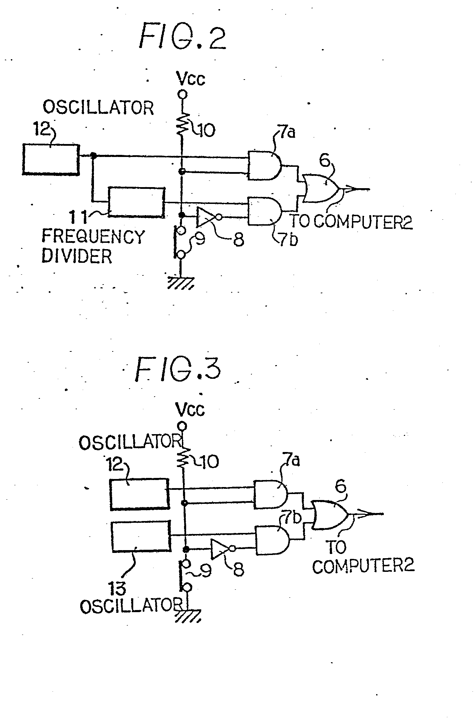

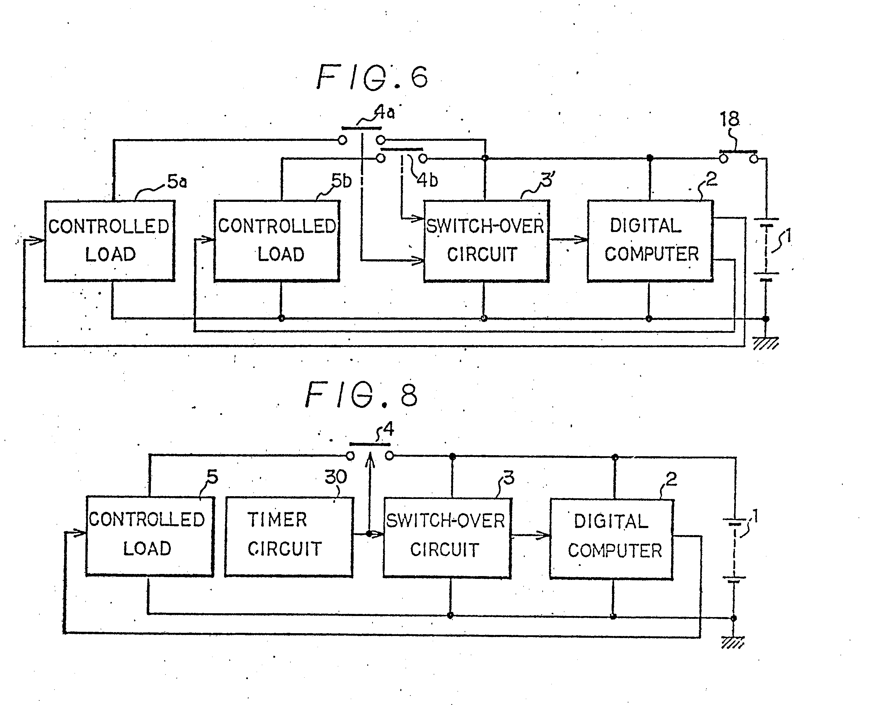

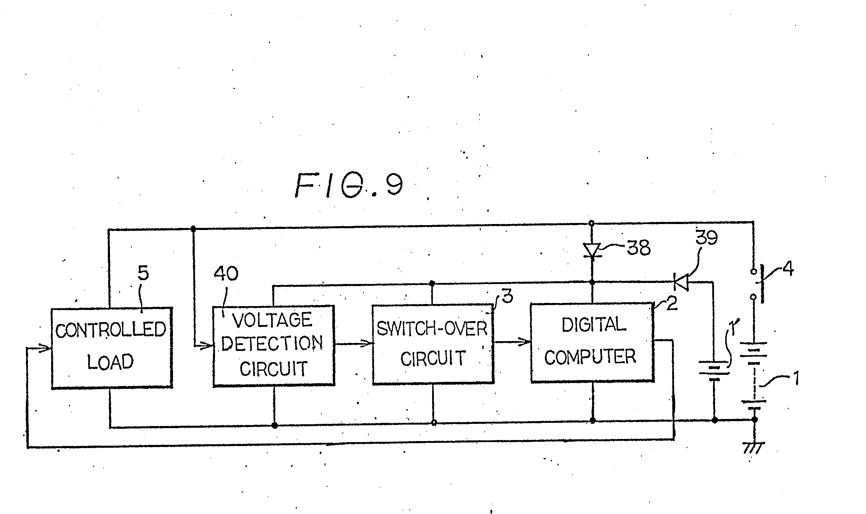

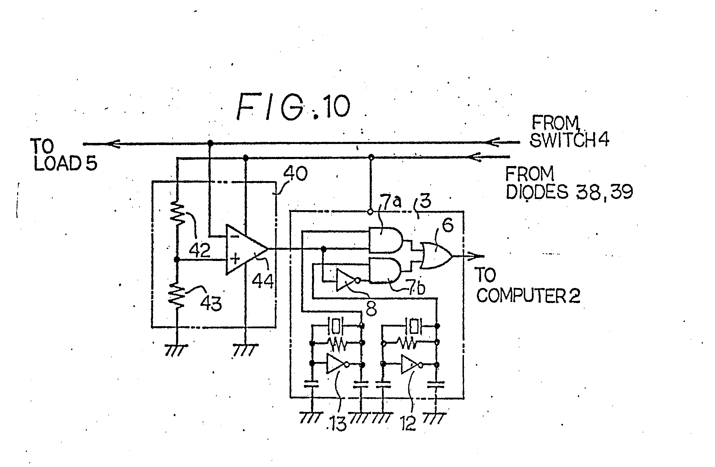

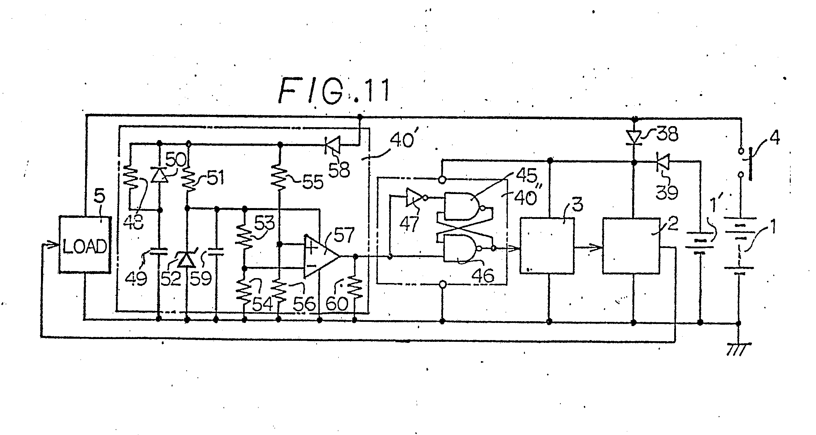

FIG.1 is a block diagram illustrating a first embodiment according to the invention, FIGs.2, 3, 4, and 5 are electric wiring diagrams illustrating different examples of the switch-over circuit 3 of FIG.1, FIG.6 is a block diagram illustrating a second embodiment according to the invention, FIG.7 is an electric wiring diagram illustrating the example of the switch-over circuit 6 of FIG.6, FIG.8 is a block diagram illustrating a third embodiment of the invention, FIG.9 is a block diagram illustrating a fourth embodiment of the invention, FIG.10 is an electric wiring diagram illustrating the details of FIG.9, and FIG. 11 is an electric wiring diagram illustrating partly in schematic a fifth embodiment of the invention.

DETAILED DESCRIPTION OF THE PREFERRED EMBODIMENT

The present invention is described hereinunder with reference to the accompanying drawings through which the same reference numerals are used to designate the same circuits or components. In FIG.1 illustrating a first embodiment, numeral 1 designates a source of electric power such as a storage battery across which an electric controlled load 5 is connected through a normally-open switch 4. Numeral 2 designates a digital computer connected across the electric power source 1 to be kept operative with the supply of electric power. The digital computer 2 is a C-MOS(complementary metal-oxide semiconductor) type microcomputer which comprises a CPU(central processing unit), ROM(read only memory), RAM(random access memory) and associated circuits. It is known well that the CPU dynamically performs a predetermined calculation required for controlling the operation of the controlled load by executing instructions stored in the ROM in timed relation with clock pulses supplied periodically. The calculation result is stored in the RAM. When the RAM is dynamic type, the stored data in the RAM must be refreshed periodically in timed relation with the clock pulses. The calculation result is applied as a control signal to control the operation of the controlled load 5. Since the electric power consumed by the C-MOS digital computer 2 is substantially proportional to the frequency of the clock pulses in the

- 3 -

case of dynamic operation, it is desirable to keep the frequency of the clock pulses at a low value to thereby reduce the electric power consumed by the computer 2 when the controlled load 5 is kept inoperative with the supply of no electric power. However it is not desirable to keep the frequency of the clock pulses at the low value when the controlled load 5 is kept operative with the supply of electric power. This is because that the instruction-executing speed of the digital computer 2 is also proportional to the frequency of the clock pulses. To keep the frequency of the clock pulses at the high and low values when the conrolled load 5 is kept operative and inoperative respectively, a switch-over circuit 3 which is supplied with the electric power from the power source 1 and responsive to the opening and closing conditions of the switch 4 is connected to the digital computer 2.

When the switch 4 is closed, the controlled load 5 is kept operative and the switch-over circuit 3 responsively generates the clock pulses periodically at the high frequency. Receiving the high frequency colck pulses, the digital computer 2 performs the required calculation for the controlled load 5 by performing the programmed instructions in timed relation with the high frequency clock pulses. That is, the computer 2 performs the caluculation at a comparatively high speed so that the operation of the controlled load 5 is controlled in accordance with each calculation result. When the switch 4 is opened, on the other hand, the controlled load 5 is kept inoperative with the supply of no electric power and the switch-over circuit 3 responsively generates the clock pulses periodically at the low frequency. Receiving the low frequency clock pulses, the digital computer 2 performs such operation as refreshing the stored calculation result in timed relation with the low frequency clock pulses so that the stored calculation result may be used in the next calculation which is to be performed upon the next closure of the switch 4. Thus, keeping the frequency of the clock pulses applied to the computer 2 upon opening of the switch 4 at the low value is effective to reduce the electric power consumed by the computer 2 without deteriorating the computer operation required when the controlled load 5 is kept inoperative.

One example of the switch-over circuit 3 is illustrated in FIG.2. The output of an oscillator 12 is connnected to an AND gate 7a and to a frequency divider 11. The clock pulses applied from the oscillator 12 to the frequency divider 11 are divided into one fourth in frequency, for example. The output of the divider 11 is connected to an AND gate 7b. One of inputs of the AND gate 7a is directly connected to a normally-closed switch 9 which is connected to the power source $V_{CC}$ through a resistor 10, while one of inputs of the AND gate 7b is connected to the switch 9 through an inverter 8. The outputs of the AND gates 7a and 7b are connected to an OR gate 6 and the output of the OR gate 6 is connected to the digital computer 2 so that the clock pulses are

applied from the OR gate 6 to the computer 2. The switch 9 which is mechanically linked with the switch 4 shown in FIG.1 closes and opens in response to the respective opening and closing of the switch 4. Accordingly, the high frequency clock pulses of the oscillator 12 are applied to the computer 2 with a high level signal applied from the switch 9 to the AND gate 7a during the closure of the switch 4, while the high frequency clock pulses of the oscillator 12 are divided into the low frequency clock pulses and applied to the computer 2 with the high level signal applied from the inverter 8 to the AND gate 7b during the opening of the switch 4. It should be noted from the foregoing description that the electric power consumed in the computer 2 is approximately reduced to one fourth when the computer 2 is operated by the low frequency clock pulses (e.g.500 KHZ) relative to the case when the computer 2 is operated by the high frequency clock pulses (e.g. 2 MHZ).

FIG.3 illustrates another example of the switch-over circuit 3 in which two oscillators 12 and 13 which respectively generate clock pulses at the high and low frequencies are provided. The operation of this example related to the switch 4 is the same as in the example of FIG.2.

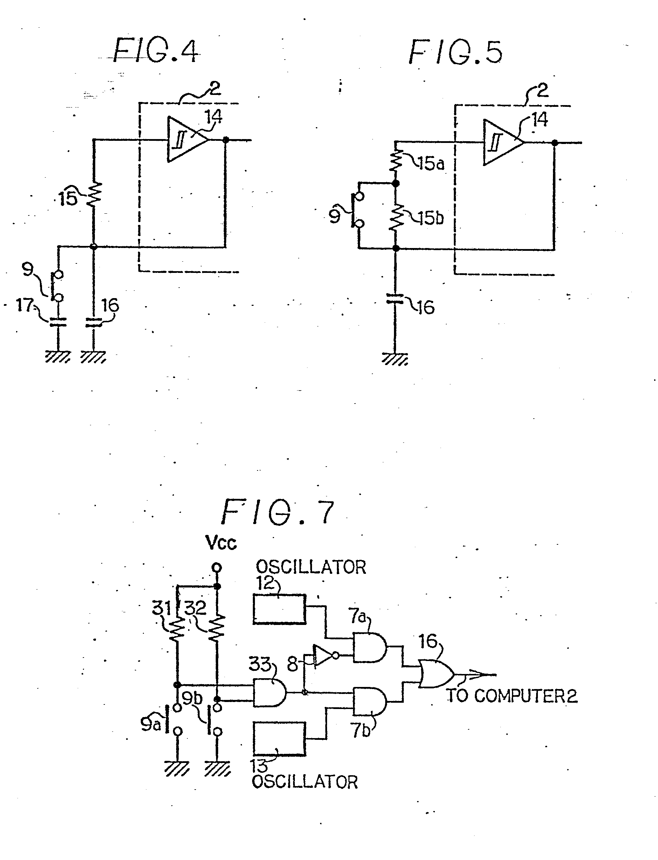

FIG.4 illustrates a further example of the switch-over circuit 3 which uses the oscillating function of the digital computer 2 so that the oscillating frequency is determined by a resistor 15 and capacitors 16 and 17 connected outside the computer 2. During the opening of the switch 4, the switch 9 closes to connect the capacitor 17 to the capacitor 16. As a result, the time constant C.R determined by the resistor 15 and the capacitor 16 upon opening of the switch 9 is increased by the capacitor 17 so that the oscillating frequency of the digital computer 2 is lowered. A buffer 14 generates clock pulses in cooperation with the resistor 15 and capacitors 16 and 17. In such an example in which the resistor and capacitor are provided outside the computer 2, the resistance value of series-connected resistors 15a and 15b may be changed by the switch 9 as illustrated in FIG.5 to thereby change the oscillating frequency.

A second embodiment of the present invention is illustrated in FIG.6. An electric control system is supplied with the electric power through a normally-closed switch 18 which is opened only when the control system is kept inoperative for a long period of time. The electric control system includes a plurality of controlled loads 5a and 5b which are kept operative by the respective closures of normally-open switches 4a and 4b. The controlled loads 5a and 5b are connected so that the operations thereof are controlled by digital computer 2. When at least one of the switches 4a and 4b is closed to keep the corresponding controlled loads 5a and 5b operative, the switch-over circuit 3' responsively applies the clock pulses of high frequency to the computer 2. When both of the switches 4a and 4b are open, the switch-over circuit 3' applies the clock pulses of low frequency.

In this embodiment, the switch-over circuit 3' may be designed in the substantially same manner as in the examples of FIG.2 to FIG.5. One example in which the circuit in FIG.3 is used is illustrated in FIG.7. Numeral 9a designates a normally-open switch which mechanically or electrically responds to the switch 4a to close, upon closure of the switch 4a, and mumeral 9b designates a mormally-open switch which mechanically or electrically responds to the switch 4b to close upon closure of the switch 4b. The switches 9a and 9b develop, at the respective junctions with resistors 31 and 32, a high and low level signals in response to the respective opening and closing thereof. These signals are applied to an AND gate 33 to be subjected to the AND logic operation. When at least one of the switches 9a and 9b is closed upon one of closures of the switches 4a and 4b, the AND gate 33 produces the low level signal which allows the high frequency clock pulses of the oscillator 12 to be applied to the computer 2 through the AND gate 7a. When both of the switches 4a and 4b are open the AND gate 33 produces the high level signal which allows the low frequency clock pulses of the oscillator 13 to be applied to the computer 2 through the AND gate 7b.

A third embodiment of the present invention is illustrated in FIG.8. The normally-open switch 4 which switches on and off the supply of electric power from the electric power source 1 to the controlled load 5 is connected to be opened and closed by a timer circuit 30. The timer circuit 30 is connected to control the switch-over circuit 3 in synchronization with the switch 4. The timer circuit 30 which may be a mechanical clock opens and closes the switch 4 and simultaneously enables the switch-over circuit 3 to switch over the frequency of clock pulses between the high and low values. According to this arrangement, not only the control system is enabled to operate in a periodic or delayed manner, but also the frequency of the clock pulses applied to the computer 2 is lowered when the controlled load 5 is kept inoperative.

A fourth embodiment of the present invention is illustrated in FIG.9. In addition to the main electric power source 1 to which a diode 38 is connected through the switch 4, an auxiliary electric power source 1' is connected to supply the electric power through a diode 39 when the switch 4 is kept open or the voltage of the battery 1 is excessively low. To detect these conditions which cause the inoperative condition of the controlled load 5, a voltage detection circuit 40 is provided. The diodes 38 and 39 are connected in common at the respective cathodes to constitute a diode OR circuit. As a result, the higher one of the voltages of the main power source 1 and the auxiliary power source 1' is supplied at the junction between the diodes 38 and 39.

FIG.10 illustrates the details of the voltage detection circuit 40 and the switch-over circuit 3 which is substantially the same as the circuit shown in FIG.3. The voltage detection circuit 40 divides the voltage constantly supplied through the diode OR circuit into one half by resistors 42 and 43 and compares the voltage supplied from the main power source 1 to the controlled load 5 with the divided voltage by a C-MOS comparator 44. When the voltage supplied from the main power source 1 decreases below the divided voltage, the comparator 44 produces the high level signal indicative of the inoperative condition of the controlled load 5 so that the low frequency clock pulses of the oscillator 13 are applied to the computer 2. On the contrary, when the voltage supplied from the main power source 1 is sufficient to keep the controlled load 5 operative, the comparator 44 produces the low level signal so that the high frequency clock pulses of the oscillator 12 are applied to the computer 2.

In the fourth embodiment, the computer 2 operates in timed relation with the low frequency clock pulses as long as the voltage of the main power source 1 excessively decreases. For instance, the sufficient voltage is not supplied to the controlled load 5 in spite of the closure of the switch 4, when a starter motor is energized to crank an internal combustion engine of the automobile. This voltage decrease is temporary and the voltage supplied to the control system is restored to a normal level soon after the starter motor is deenergized.

In such a control system as an engine control system in which the controlled load 5(an ignition apparatus or a fuel metering apparatus), switching over the frequency of the clock pulses applied to the computer 2 from the high value to the low value in the middle of the operation of the computer 2 is not desirable. This is because that the control capability of the computer 2 is inevitably deteriorated. Switching over the frequency of the clock pulses is therefore made irresponsive to the temporary decrease in the voltage supplied from the main electric power source 1 in a fifth embodiment illustrated in FIG.11. In this embodiment, a voltage detection circuit 40' which produces a detection signal when the voltage supplied from the main power source 1 is kept decreased below a predetermined value for more than a few seconds and a hold circuit 40" which holds the detection signal are provided. A capacitor 49 is connected to be charged through a resistor 48 and a diode 58 by the main electric power source 1 during the closure of the switch 4 and to be discharged through a diode 50 during the opening of the switch 4 or the decrease of the voltage supplied from the main power source 1. A resistor 51 and a constant voltage diode 52 which constitute a constant voltage circuit provide a constant voltage during the supply of the voltage from the main power source 1 and a predetermined interval of time after the start of discharging the capacitor 49. Resistors 53 and 54 connected in parallel with a capacitor 59 divide the constant voltage across the diode 52, and resistors 55 and 56 connected in series with the diode 58 divide the voltage across the resistor 48 and the capacitor 49. These divided voltages are compared with a comparator 57. The capacitor 59 is connected to hold the operating voltage supplied to the comparator 57 for a sufficient period of time. A resistor 60 is connected to provide a low level signal without fail when the voltage supply to the comparator 57 fails. The hold circuit 40" comprises NAND gates 45 and 46 and an inverter 47 to be set and reset by the high and low level signals applied from the voltage detection circuit 40'.

When the switch 4 is closed, the capacitor 49 is charged speedily and the divided voltage produced by the resistors 55 and 56 responsively increases. The capacitor 59 is also charged at the substantially same speed as the capacitor 49. With the voltage-dividing ratio of the resistors 53 and 54 being smaller than that of the resistors 55 and 56, the comparator 57 produces the high level signal. When the voltage supplied from the main power source 1 decreases excessively because of the energization of the starter motor (not shown) which is connected in parallel with the controlled load 5 or when the switch 4 opens, the voltage across the capacitor 49 decreases because of its discharging. However, since the voltage-dividing ratio of the resistors 53 and 54 is determined to be smaller than that of the resistors 55 and 56, the comparator 57 is enabled to keep producing the high level signal even when the voltage supplied to the controlled load 5 temporarily decreases.

The comparator 57 produces the low level signal, when the switch 4 is kept open for a long period of time to keep the controlled load 5 inoperative. The hold circuit 40" produces the output signals which are opposite in polarity to the detection signals of the detection circuit 40'. Therefore, the switch-over circuit 3 which is in the same circuit construction as in FIG.10 is enabled to apply the low frequency clock pulses to the digital computer 2 only when the voltage detection circuit 40' produces the low level signal, thus preventing the frequency switch-over upon the temporary decrease in the voltage supplied from the power source 1 to the controlled load 5. It is noted in the embodiment of FIG.11 that, since the hold circuit 40" is enabled to keep producing the low level signal with the electric power constantly supplied from the auxiliary power source 1' upon opening of the switch 4, the digital computer 2 which is also supplied with the electric power from the auxiliary power source 1' can perform the required operation in timed relation with the low frequency clock pulses during the inoperative condition of the controlled load 5.

The present invention is not limited to the abovedescribed embodiments but may be modified without departing from the spirit of the invention.

WHAT IS CLAIMED IS:

1.      In a control system having an electric power source, a controlled load kept operative and inoperative when the supply of electric power is switched on and off respectively, a switch connected to switch on and off the supply of electric power from said electric power source to said controlled load, and a digital computer kept supplied with the electric power from said electric power source and programmed to control the operation of said controlled load by executing stored instructions in timed relation with periodic pulses, the improvement comprising:

     said digital computer being a complementary metal-oxide semiconductor type;

     means responsive to the electric power supplied to said controlled load and effective to produce a first and second outputs indicative of the sufficiency and insufficiency of the electric power supplied to said controlled load respectively; and

     means responsive to said first and second outputs and effective to keep the frequency of said periodic pulses at a first and second values in response to said first and second outputs respectively, said second value being lower than said first value.

2.      The improvement according to claim 1, wherin said electric power source includes a first and second power source means, said first power source means being connected to supply said controlled load with the electric

- 14 -

power through said switch, and further comprising:

a first diode connected to supply said digital computer and said outputs responsive means with the electric power from said first power source means through said switch in a simultaneous relation with the supply of electric power from said first power source means to said controlled load; and

a second diode connected to keep supplying said digital computer and said outputs responsive means with the electric power from said second power source means irrespective of the supply of electric power to said controlled load.

FIG.1

CONTROLLED LOAD 5

SWITCH-OVER CIRCUIT 3

DIGITAL COMPUTER 2

4

FIG.2

FIG.3

## FIG.4

## FIG.5

## FIG.7

Vcc

OSCILLATOR
12

OSCILLATOR
13

TO COMPUTER2

4/4

## FIG.6

## FIG.8

FIG.9

CONTROLLED LOAD — 5

VOLTAGE DETECTION CIRCUIT — 40

SWITCH-OVER CIRCUIT — 3

DIGITAL COMPUTER — 2

38

39

1

4

6/7

# FIG.10

TO
LOAD 5

FROM
SWITCH 4

FROM
DIODES 38,39

40

42

43

44

7a  3

6

8

7b

TO
COMPUTER 2

13  12

7/7

FIG.11

European Patent
Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 177 864 (PHILIPS) <br> * Page 2, lines 1-25 * <br> -- | 1,2 | G 06 F 1/00 |
| | ELECTRICAL DESIGN NEWS, vol. 18, no. 8, 20th April 1973, pages 25-26 <br> Denver, U.S.A. <br> "Power-supply modification turns standard calculator chip into unique product" <br> * Page 25, left-hand column, lines 23-35; middle column, "CMOS" * <br> -- | 1 | |
| | | | **TECHNICAL FIELDS SEARCHED (Int.Cl. 3)** |
| | PATENTS ABSTRACTS OF JAPAN, vol. 2 no. 11, 26th January 1978, page 10517E77 <br> & JP - A - 52 128015 (FUJI) 27-10-1977 <br> * Complete document * <br> -- | 1,2 | G 06 F 1/00 |
| | FR - A - 2 246 918 (LICENTIA) <br> * Page 1, line 32 - page 2, line 30 * <br> ---- | 2 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 06-02-1980 | LEPEE |

EPO Form 1503.1   06.78